# EUROPÄISCHE PATENTSCHRIFT

(11) **EP 0 812 803 B1**
(45) Veröffentlichungstag und Bekanntmachung des Hinweises auf die Patenterteilung: **30.08.2000**
(21) Anmeldenummer: 97108866.1
(22) Anmeldetag: 03.06.1997
(51) Int. Cl.: C01B 33/145

(54) **Verfahren zur Herstellung salzarmer Kieselsoldispersionen in niedrigsiedenden Alkoholen**
Preparation of silica sol dispersions in low boiling points alcohols,with a low salt content
Préparation de dispersions d'un sol de silice à faible teneur en sel, dans des alcools à bas point d'ébullition

(30) Priorität: 10.06.1996 DE 19623062
(43) Veröffentlichungstag der Anmeldung: 17.12.1997
(73) Patentinhaber: BAYER AG, 51368 Leverkusen (DE)
(72) Erfinder: Brekau, Uwe, Dr., 51065 Köln (DE); Rosenow, Bernd, 51371 Leverkusen (DE); Block, Hans-Dieter, Dr., 51381 Leverkusen (DE)

(56) Entgegenhaltungen:
- EP-A- 0 607 710
- GB-A- 908 614
- US-A- 3 051 657
- US-A- 3 855 145
- PATENT ABSTRACTS OF JAPAN vol. 14, no. 431 (C-759) [4374] , 17.September 1990 & JP 02 167813 A (MITSUBISHI MONSANTO CHEM CO), 28.Juni 1990,

## Beschreibung

Die vorliegende Erfindung betrifft ein Verfahren zur Herstellung von salzarmen Kieselsoldispersionen in niedrigsiedenden Alkoholen und die Verwendung der nach diesem Verfahren erhaltenen Organosole zur Herstellung von Beschichtungen auf metallischen und nichtmetallischen Substraten.

Kieselsoldispersionen in organischen Lösungsmitteln sind seit langem bekannt (vgl. R. K. Iler, The Chemistry of Silica, Seiten 412 - 415, John Wiley and Sons, New York, 1979).

Kieselsole in einem organischen Dispergiermedium, welches einen höheren Siedepunkt als Wasser bei atmosphärischem Druck aufweist, sind auf einfache Art und Weise aus wäßrigen Solen darstellbar. Eine wäßrige Kieselsoldispersion wird mit dem höher siedenden organischen Lösungsmittel versetzt und das Wasser durch Destillation entfernt. Nach diesem Prinzip arbeitende Verfahren sind in der Literatur ausführlich beschrieben: GB-A 965 123, EP-A 372 124, US-A 2 921 913, US-A 2 974 105, US-A 3 004 92, US-A 3 629 139, US-A 634288, US-A 3 336 235, US-A 3 699 049.

Weitaus schwieriger zugänglich sind Kieselsole in organischen Dispergiermedien, welche einen niedrigeren Siedepunkt als Wasser bei atmosphärischem Druck aufweisen. Zunächst bediente man sich mehrstufiger, umständlicher Verfahren, welche von teuren Rohstoffen ausgingen. DE-A 1 935 752, GB-A 1 136 016 und GB-A 1 246 032 beschreiben die elektrolytische Darstellung eines solchen Organosols. Als Siliciumquelle findet eine Ferrosiliciumanode Anwendung. Das organische Dispergiermedium besteht aus einem einwertigen Alkohol, enthaltend 1 bis 3 C-Atome, geringen Wasseranteilen und einem spezifizierten Leitelektrolyt. Das Verfahren ist umständlich, energieverzehrend und wegen des Einsatzes teurer Rohstoffe auch wirtschaftlich unvorteilhaft. Salzarme Kieselsole in einem Verfahrensschritt (oder gar elektrolytarme Kieselsole) sind damit nicht zugänglich.

Insbesondere für den Zweck der Beschichtung von Oberflächen sind aber salzarme Kieselsole in organischen, leicht siedenden Medien erwünscht, weil so durch Salzgehalt bedingte Korrosionen und Ausblühungen unterbleiben.

Ideale Ausgangsstoffe wären die in einfacher und kostengünstiger Weise gut zugänglichen und in großer Menge im Handel befindlichen wäßrigen alkalischen Kieselsol-Dispersionen. Diese sind das Primärprodukt der technischen Erzeugung von Kieselsolen und in verschiedenen Konzentrationen und verschiedenen Größen (Durchmesser von ca. 5 bis 100 nm) gut herstellbar. Andere, z.B. sauer eingestellte oder oberflächenmodifizierte oder ionenausgetauschte oder im Salzgehalt veränderte Kieselsole werden daraus durch Nachbehandlung hergestellt.

Der Übergang von der Ferrosiliciumanode auf diese wäßrigen Kieselsole als Ausgangsprodukt stellte einen wesentlichen Fortschritt in der Technik dar, wodurch zugleich salzarme Kieselsole zugänglich wurden. US-A 2 801 185 und US-A 3 351 561 beschreiben die Herstellung eines Kieselsols in einem einwertigen, mit Wasser mischbaren Alkohol mit einem Siedepunkt >50°C. Ausgangsprodukt des Verfahrens ist dabei ein wäßriges, salzfreies (US-A 3 351 561) oder kationenarmes (US-A 2 801 185) Kieselsol. Die einzusetzenden Kieselsole müssen in einem vorgeschalteten Verfahrensschritt durch die Behandlung der primär erzeugten, alkalischen Kieselsole mit Ionenaustauschern erzeugt werden. Der Lösungsmittelaustausch wird dann durch Destillation vorgenommen. In Kieselsolen, welche nach diesen Verfahren erhalten werden, ist ein Großteil der OH-Gruppen an der Partikeloberfläche mit dem eingesetzten Alkohol verestert. Dieses Verfahren zur Herstellung von Kieselsolen in organischen Lösungsmitteln ist ausgehend von den gut verfügbaren, handelsüblichen salzarmen Kieselsolen zweistufig und liefert ein Produkt, in dem ein Großteil der OH-Gruppen an der Partikeloberfläche mit dem eingesetzten Alkohol verestert sind. Für die Anwendung des Produktes zur Beschichtung ist eine solche Veresterung von Nachteil, da reaktive Anknüpfungspunkte zu den zu beschichtenden Oberflächen hierdurch beseitigt werden. Auch eine Co-Kondensation beispielsweise mit Silanen - vorteilhaft für die Anwendung des Produktes zur Beschichtung - wird mangels freier OH-Gruppen an der Partikeloberfläche zurückgedrängt. Die spezifische, hydroxylierte Oberfläche der Partikel beträgt bei Produkten nach US-A 2 801 185 weniger als 10 m²/g.

US-A 3 855 145 beschreibt die Herstellung eines salzarmen Kieselsols beispielsweise in n-Propanol oder in Glykolen, ohne daß eine Veresterung der oberflächlichen OH-Gruppen mit dem Lösungsmittel stattfindet. Hierbei wird ein wäßriges Kieselsol erst mit einem Kationen- und dann mit einem Anionenaustauscherharz behandelt. Die Ionenaustauscherharze gelangen im Festbettverfahren zur Anwendung. Um eine möglichst weitgehende Entfernung des Elektrolyten zu gewährleisten, wird die Behandlung mit den Ionenaustauscherharzen nach einem Zeitraum von 12 bis 24 h wiederholt. Nach der Entionisierung findet in einem anschließenden, weiteren Verfahrensschritt der Austausch des Lösungsmittels durch Destillation statt. Die Temperatur bei der Destillation liegt unterhalb von 100°C. Die Schritte der Entionisierung und der Wasserentfernung sind räumlich und zeitlich voneinander getrennte Verfahrensschritte. Dabei ist der Schritt der Entionisierung mit einem hohen, zusätzlichen Zeitaufwand verbunden. Nach dieser Patentschrift sind salzarme Kieselsole nur durch ein aufwendiges, mehrstufiges Verfahren zugänglich.

Das in der EP-A 607 710 beschriebene Verfahren zur Erzeugung von Kieselsol-dispersionen in 1 bis 3 C-Atome enthaltenden Alkoholen durch Pervaporation einer in Wasser und Alkohol gelösten Kieselsoldispersion mit Entfernung des Wassers bis unter 1 Gew.-% führt nur in mehreren Verfahrensschritten zu einer salzarmen Kieselsoldispersion in Alkohol.

Aufgabe war es daher, ein Verfahren zur Verfügung zu stellen, das es gestattet, salzarme Kieselsole in organischen Lösungsmitteln mit einem Siedepunkt, der niedriger als der von Wasser ist, wirtschaftlich günstig und mit geringem Energieeinsatz technisch einfach herzustellen. Diese Aufgabe konnte durch das erfindungsgemäße Verfahren gelöst werden.

Gegenstand der Erfindung ist ein Verfahren zur Herstellung einer salzarmen Kieselsoldispersion in C₁- bis C₃-Alkoholen, insbesondere in C₂- und C₃-Alkoholen, besonders bevorzugt in iso-Propanol, enthaltend nicht mehr als 1 Gew.-% Wasser und bis zu 56 Gew.-% SiO₂ in der Form diskreter Partikel eines mittleren Durchmessers von 9 bis 50 nm, welche nicht durch interpartikuläre Siloxanbindungen verknüpft sind, dadurch gekennzeichnet, daß im Eintopfverfahren zu einem alkalischen, wäßrigen Kieselsol, das bis zu 50 Gew.-% SiO₂ in Form diskreter Partikel eines mittleren Durchmessers von 9 bis 50 nm enthält, welche nicht durch interpartikuläre Siloxanverbindungen verknüpft sind, ein stark saures Kationenaustauscherharz in einer Menge zugegeben wird, die ausreicht, um den pH-Wert unter 4 zu senken, danach das 0,6- bis 2-fache der Masse des wäßrigen Kieselsols an C₁- bis C₃-Alkoholen, insbesondere C₂- und C₃-Alkohole, besonders bevorzugt iso-Propanol, zugegeben wird, anschließend der Wassergehalt auf weniger als 1 Gew.-% reduziert, das Kationenaustauscherharz abgetrennt und gegebenenfalls die Kieselsoldispersion auf bis zu 56 Gew.-% SiO₂ konzentriert wird.

Bevorzugt erfolgt die Reduzierung des Wassergehaltes auf weniger als 1 Gew.% durch azeotrope Destillation bei atmosphärischem oder reduziertem Druck bei konstantem Volumen durch Hinzufügen von C₁- bis C₃-Alkohol.

Im Falle von Methanol kann auch vorzugsweise die Reduzierung durch einstufige Destillation erfolgen.

Eine weitere bevorzugte Ausführungsform der Reduzierung des Wassergehaltes kann auch durch Pervaporation erfolgen.

Eine besonders bevorzugte Ausführungsform ist die Reduzierung des Wassergehaltes durch Ultrafiltration.

Der Anionen- und Elektrolytgehalt der erhaltenen Kieselsoldispersion kann zusätzlich vermindert werden, indem die alkoholische Dispersion anschließend mit einem stark basischen Anionenaustauscherharz in einem Rührbett behandelt wird, bis der pH-Wert in einer mit Wasser im Gewichtsverhältnis 1 : 1 verdünnten Probe nicht mehr weiter ansteigt.

Die nach dem erfindungsgemäßen Verfahren hergestellte Kieselsoldispersion ist durch ihre Salzarmut ausgezeichnet und gegebenenfalls auch noch elektrolytarm. Die nach dem erfindungsgemäßen Verfahren hergestellten salzarmen, gegebenenfalls auch elektrolytarmen Kieseldispersionen eignen sich besonders zur Herstellung von Beschichtungen auf metallischen oder nichtmetallischen Substraten, also zur Verwendung in entsprechenden Formulierungen zur Herstellung von Schutzüberzügen auf den genannten Substraten.

Die im erfindungsgemäßen Verfahren eingesetzten Ausgangsprodukte sind wäßrige Kieselsole, welche kommerziell (beispielsweise unter dem Namen Levasil®, Produkte der Bayer AG) in ihrer alkalischen Form mit einem pH-Wert ≥ 9 erhältlich sind.

Als organisches Lösungsmittel werden Alkohole, insbesondere C₂- und C₃-Alkohole, speziell iso-Propanol, in dem für die Anwendung des Endproduktes notwendigen Reinheitsgrad eingesetzt. Es ist bekannt, daß Wasser mit den C₂- und C₃-Alkoholen jeweils ein binäres Azeotrop bildet. Der Siedepunkt des Azeotropes bei atmosphärischem Druck liegt z.B. für i-Propanol bei 80,4°C, der Wassergehalt des Azeotropes beträgt 12,2 Gew.-%. Zur Trennung des Azeotrops und zur Wiedergewinnung des iso-Propanols, wie auch der anderen Alkohole, können verschiedene Verfahren verwendet werden, u.a. die Pervaporation oder die Dampfpermeation. Wird die Pervaporation zur Abtrennung des Wassers aus einer wäßrig-isopropanolischen Lösung eingesetzt, erübrigt sich eine Trennung.

Im erfindungsgemäßen Verfahren werden handelsübliche, stark saure Kationenaustauscher, wie Kationenaustauscherharze mit Polystyrolgerüst, die zumeist Sulfonsäuregruppen, aber auch Phosphonsäuregruppen enthalten, sowie saure Zeolithe, wie Zeolith Y oder ZSM-5 in der H⁺-Form, eingesetzt. Zur nachträglichen, gegebenenfalls auszuführenden Anionenentfernung werden stark basische Anionenaustauscherharze eingesetzt.

Die Temperaturen im erfindungsgemäßen Verfahren können in einem größeren Bereich variiert werden. Im allgemeinen arbeitet man bevorzugt zwischen 20° und etwa 100°C, vorzugsweise zwischen 30° und 50°C.

Das Verfahren kann bei Normaldruck, aber auch bei reduziertem Druck durchgeführt werden. Im allgemeinen arbeitet man bei Drücken zwischen 50 und etwa 1 000 mbar, vorzugsweise zwischen 100 und 200 mbar. Die druckbetriebenen Trennverfahren zur Reduzierung des Wassergehaltes, wie z.B. die Ultrafiltration arbeiten bei höheren Drücken von beispielsweise 0,2 bis 10 bar oder entsprechenden, für das Verfahren besonders geeigneten Drücken. Bei der Entfernung des Wassers durch azeotrope Destillation sind Arbeitstemperatur und Arbeitsdruck durch das temperaturabhängige Dampfdruckgleichgewicht des Lösemittel-Gemisches (z.B. i-Propanol/Wasser) miteinander verknüpft.

Besonders wichtig im erfindungsgemäßen Verfahren ist die genaue Kontrolle des pH-Wertes. Der pH-Wert darf nicht über eine Grenze von etwa 4 steigen. Es ist bekannt, daß Kieselsoldispersionen in einem pH-Bereich von 4 bis 6 dazu neigen, sehr rasch zu gelieren. Der Lösungsmittelaustausch muß deswegen in einem pH-Bereich < 4, vorzugsweise zwischen 2 und 3 vorgenommen werden. Besonders zu beachten im erfindungsgemäßen Verfahren ist demzufolge die Zugabe ausreichender Mengen an Kationenaustauscherharz und die ständige Kontrolle des pH-Wertes. Die Zugabe einer ausreichenden Menge an Kationenaustauscherharz gewährleistet, daß der pH-Wert nicht in den genannten, kritischen Bereich ansteigt. Eine ausreichende Menge Kationenaustauscherharz ist also bevorzugt eine solche, welche den pH-Wert in der wäßrig-alkoholischen Kieselsoldispersion auf pH-Werte zwischen 2 und 3 senkt.

Bei der Durchführung des erfindungsgemäßen Verfahrens versetzt man das alkalische, wäßrige Kieselsol mit C₁- bis C₃-Alkohol im Verhältnis der Massen von 1:0,6 bis 1:2 und mit einer ausreichenden Menge des stark sauren Kationenaustauscherharzes, wodurch nahezu alle in der Dispersion enthaltenen Kationen entfernt werden und ein salzarmes Produkt erhalten wird. Der Kationengehalt kann durch gängige analytische Methoden bestimmt werden. Im Anschluß an die Zugabe von C₁- bis C₃-Alkohol und Kationenaustauscherharz zum Kieselsol wird in einer bevorzugten Variante eine Destillation, vorzugsweise für die C₂- und C₃-Alkohole eine azeotrope Destillation, bei konstantem Volumen durch Hinzufügen von Alkohol zur Entfernung des Wassers durchgeführt. Dabei ist die Menge pro Zeiteinheit an abzudestillierendem Lösemittelgemisch im wesentlichen abhängig von der zur Verfügung stehenden Verdampferkapazität, also der zuführbaren Energiemenge. Während des Prozesses des Lösemittelaustausches und der sich gegebenenfalls anschließenden Konzentrierung ist eine gute Durchmischung des Reaktorinhaltes zu gewährleisten. Dies bewirkt, daß der Kontakt der Dispersion mit dem Ionenaustauscherharz gewährleistet ist, was vorteilhaft für den Ionenaustausch ist.

Zur Prozeßkontrolle, wie weit der Lösemittelaustausch vonstatten gegangen ist, kann mit einer Probe des Gemisches eine Wassergehaltsbestimmung beispielsweise nach der Methode von Karl-Fischer durchgeführt werden. Auch andere Methoden, wie die Siedepunktskontrolle, sind anwendbar. Von großem Vorteil ist die Anwesenheit des Ionenaustauscherharzes während des gesamten Prozesses des Lösemittelaustausches. Dies gewährleistet eine nahezu vollständige Kationenentfernung. Die Nachdiffussion von weiteren Salzen aus den Partikeln wird durch eine erhöhte Temperatur noch begünstigt, und auch dieser Anteil an Metallkationen kann durch das während des gesamten Verfahrens vorhandene Kationenaustauscherharz abgefangen werden.

Bevor der gegebenenfalls durchzuführende Konzentrierungsvorgang eingeleitet wird, ist es bevorzugt, vom Kationenaustauscherharz abzufiltrieren. Danach kann vorzugsweise auf eine erhöhte Feststoffkonzentration von z.B. zwischen 30 und 56 Gew.-% aufkonzentriert werden.

Das bei der Destillation anfallende azeotrope Lösemittelgemisch aus Alkohol und Wasser kann zur Recyclisierung des eingesetzten Alkohols einer üblichen Trennung unterworfen werden.

In einer anderen Verfahrensvariante, bei der die Wasserentfernung aus der wäßrig-alkoholischen Lösung mittels Pervaporation in Anwesenheit des Kationenaustauscherharzes durchgeführt wird, geht im Fall der C₂- und C₃-Alkohole die Wasserentfernung aus der wäßrig-alkoholischen Dispersion ohne Anfall eines Alkohol-Wasser-Azeotrops vonstatten, so daß eine Azeotrop-Trennung entfällt.

Es ist außerdem möglich, in einem weiteren Verfahrensschritt durch Anionenaustausch den pH-Wert der wasserfreien oder nahezu wasserfreien, alkoholischen Dispersion bis in den Neutralbereich gezielt anzuheben. Mit sinkendem Anionengehalt erhöht sich dabei die Viskosität. Auch wenn dabei eine gelartige Konsistenz erreicht wird, ist das Produkt ohne Schwierigkeiten verstreichbar.

Die Bestimmung der Korngrößenverteilung mit Hilfe einer analytischen Ultrazentrifuge zeigt, daß die Partikel in den nach dem erfindungsgemäßen Verfahren hergestellten Dispersionen nicht aggregiert sind. Spektroskopische Methoden belegen, daß eine Veresterung der Partikeloberflächen nicht eingetreten ist.

Die nach dem erfindungsgemäßen Verfahren erhaltenen Produkte haften ausgezeichnet auf metallischen und nichtmetallischen sauberen Oberflächen. Die vorliegende Erfindung umfaßt daher auch die Verwendung der nach dem erfindungsgemäßen Verfahren hergestellten Kieselsoldispersionen, gegebenenfalls in entsprechenden Formulierungen, zur Beschichtung und zur Herstellung von Schutzüberzügen auf metallischen und nichtmetallischen Substraten.

Die Erfindung soll anhand der nachfolgenden Beispiele näher erläutert werden.

### Beispiele

### Beispiel 1

1 148 g (953 ml) Levasil® 300/30 % (Handelsprodukt der Bayer AG; 30 % Feststoffgehalt, 300 m²/g spezifische Oberfläche, pH 10,0) werden unter Rühren mit 40 g aktiviertem, stark saurem Kationenaustauscherharz Lewatit SPC 108 in der H⁺-Form (Handelsprodukt der Bayer AG) und anschließend unter Rühren mit 1 000 ml iso-Propanol bei Raumtemperatur vermischt.

Bei konstantem Volumen wird das in der Mischung enthaltene Wasser fast völlig durch azeotrope Destillation bei atmosphärischem Druck entfernt. Pro Stunde werden gleichmäßig 1 l iso-Propanol zugegeben und 1 l iso-Propanol/Wasser als azeotrope Mischung abdestilliert. Insgesamt werden so 8 1 iso-Propanol nachgeführt. Das Ionenaustauscherharz wird durch Grobfiltration abgetrennt und das Filtrat bei einer Temperatur von 35 bis 45°C und einem Druck von 100 bis 200 mbar bis auf 1 127 g, entsprechend 28 Gew.-% SiO₂ eingeengt.

### Beispiel 2

1 150 g (955 ml) Levasil® 300/30 % werden mit 3 000 ml iso-Propanol und danach unter Rühren mit 40 g aktiviertem, stark saurem Ionenaustauscherharz Lewatit SPC 108 in der H⁺-Form versetzt.

Anschließend wird auf Siedetemperatur erhitzt (ca. 80°C, langsam auf 82,4°C steigend) und das abdestillierte Volumen (i-Propanol/Wasser-Gemisch) im Destillationskolben stetig durch wasserfreies iso-Propanol ersetzt. Nach 7 Stunden sind 10 l iso-Propanol/Wasser-Gemisch abdestilliert. Durch Filtration wird das Ionenaustauscherharz abgetrennt. Das Kieselsol in iso-Propanol wird durch Eindampfen bei Normaldruck auf 30 Gew.-% SiO₂ aufkonzentriert.

### Beispiel 3

Die nach den Beispielen 1 und 2 erhaltenen Produkte werden vermischt. Die Leitfähigkeit der Mischung beträgt 95 µS, der pH-Wert einer Probe mit Wasser im Verhältnis 1:1 vermengt, wird mit 2,6 gemessen. Das Produkt hat eine Dichte von 1,03 g/ml und eine, mit dem Höppler-Kugelfallviskosimeter gemessene Viskosität von 12 mPas bei 20°C. Der SiO₂-Gehalt der Kieselsoldispersion beträgt 30 Gew.-%, der mit der Karl-Fischer-Titration bestimmte Wassergehalt liegt bei 1 Gew.-%, und die Trübung ist 220 TE/F. Eine Messung der Korngrößenverteilung mit der analytischen Ultrazentrifuge zeigt, daß Partikel im Bereich von 6 bis 24 nm enthalten sind.

### Beispiel 4

2 000 ml Levasil® 100/30 % (30 % Feststoffgehalt, 300 m²/g spezifische Oberfläche, pH 9,9) werden unter Rühren mit 90 g aktiviertem Lewatit SPC 108 in der H⁺-Form und anschließend unter Rühren mit 1 500 ml iso-Propanol bei Raumtemperatur vermischt.

Bei konstantem Volumen wird das in der Mischung enthaltene Wasser fast völlig durch azeotrope Destillation bei reduziertem Druck (35 bis 40°C, 100 bis 200 mbar) entfernt. Pro Stunde werden gleichmäßig 1 l iso-Propanol zugegeben und 1 l iso-Propanol/Wasser als azeotrope Mischung abdestilliert. Insgesamt werden so 16 l iso-Propanol nachgeführt. Das Ionenaustauscherharz wird durch Grobfiltration abgetrennt und das Filtrat bei einer Temperatur von 35 bis 45°C und einem Druck von 100 bis 200 mbar bis auf 2 234 g, entsprechend einer SiO₂-Konzentration von 32 Gew.-% eingeengt.

### Beispiel 5

1 000 ml Levasil® 100/30 % werden unter Rühren mit 40 g aktiviertem Lewatit SPC 108 in der H⁺-Form und anschließend unter Rühren mit 2 000 ml iso-Propanol bei Raumtemperatur vermischt.

Die Mischung wird über Nacht stehen gelassen.

Bei konstantem Volumen wird das in der Mischung enthaltene Wasser fast völlig durch azeotrope Destillation bei reduziertem Druck (35 bis 45°C, 100 bis 200 mbar) entfernt. Pro Stunde werden gleichmäßig 1 l iso-Propanol zugegeben und 1 l iso-Propanol/Wasser als azeotrope Mischung abdestilliert. Insgesamt werden so 8 l iso-Propanol nachgeführt. Nach Zugabe dieser iso-Propanol-Menge wird bei einer Temperatur von 30 bis 45°C und einem Druck von 100 bis 200 mbar bis auf 1 195 g eingeengt, entsprechend einer Konzentration von 31 Gew.-% SiO₂. Vom Ionenaustauscherharz wird durch eine Grobfiltration abgetrennt und mit wenig iso-Propanol nachgewaschen.

Die Kieselsole nach Beispiel 4 und 5 werden vermischt. In der Mischung wird durch Karl-Fischer-Titration ein Wassergehalt von 0,87 Gew.-% ermittelt. Die Leitfähigkeit des Produktes beträgt 97 µS, der SiO₂-Gehalt ist 28 Gew.-% und die bei 20°C mit einem Haake-Rotationsviskosimeter des Typs VT 500 gemessene Viskosität beträgt 741 mPas. Das Sol ist milchig trüb. Eine mit der analytischen Ultrazentrifuge vermessene Korngrößenverteilung zeigt, daß Partikel im Bereich von 5 bis 160 nm enthalten sind.

### Beispiel 6

250 g Levasil® 300/30 % werden mit 500 g Ethanol gemischt und unter Rühren mit 10 g aktiviertem, stark saurem Kationenaustauscherharz Lewatit SPC 108 in der H⁺-Form versetzt. Bei konstantem Volumen werden bei 50 bis 55°C und 250 bis 300 mbar Druck insgesamt 3 925 g Ethanol in dem Maße hinzugefügt, wie ein gleiches Volumen Ethanol-Wasser-Mischung abdestilliert wird. Danach wird das Ionenaustauscherharz abfiltriert.

Aufkonzentrieren durch Abdestillieren von Ethanol führt zu einem klaren Sol mit 0,04 Gew.-% H₂O und 56 Gew.-% SiO₂ in Ethanol.

### Beispiel 7

500 g Levasil® 300/30 % werden mit 1 000 ml Methanol gemischt; dem Gemisch werden 20 g Kationenaustauscherharz Lewatit SPC 108 in der H⁺-Form zugesetzt. Aus der gerührten Reaktionsmischung wird bei Normaldruck ein Methanol-Wasser-Gemisch abdestilliert. Während 10 Stunden werden zur Konstanthaltung des Volumens insgesamt 13 500 g Methanol hinzugefügt. Danach wird der Ionenaustauscher abfiltriert und das Filtrat wird eingedampft bis auf einen Rest von ca. 280 g.

Die Analyse weist einen SiO₂-Gehalt von 51,9 Gew.-% aus und einen Wassergehalt von 1,5 Gew.-%.

## Patentansprüche

1. Verfahren zur Herstellung einer salzarmen Kieselsoldispersion in C₁- bis C₃-Alkoholen, enthaltend weniger als 1 Gew.-% Wasser und bis zu 56 Gew.-% SiO₂ in Form diskreter Partikel eines mittleren Durchmessers von 9 bis 50 nm, welche nicht durch interpartikuläre Siloxanbindungen verknüpft sind, dadurch gekennzeichnet, daß im Eintopfverfahren zu einem alkalischen, wäßrigen Kieselsol, das bis zu 50 Gew.-% SiO₂ in Form diskreter Partikel eines mittleren Durchmessers von 9 bis 50 nm enthält, welche nicht durch interpartikuläre Siloxanverbindungen verknüpft sind, ein stark saures Kationenaustauscherharz in einer Menge zugegeben wird, die ausreicht, um den pH-Wert unter 4 zu senken, danach das 0,6- bis 2-fache der Masse des wäßrigen Kieselsols an C₁- bis C₃-Alkohol zugegeben wird, anschließend der Wassergehalt auf weniger als 1 Gew.-% reduziert, das Kationenaustauscherharz abgetrennt und gegebenenfalls die Kieselsoldispersion auf bis zu 56 Gew.-% SiO₂ konzentriert wird.

2. Verfahren nach Anspruch 1, dadurch gekennzeichnet, daß als Alkohol iso-Propanol eingesetzt wird.

3. Verfahren nach Anspruch 1, dadurch gekennzeichnet, daß die Reduzierung des Wassergehaltes auf weniger als 1 Gew.-% durch azeotrope Destillation bei atmosphärischem oder reduziertem Druck bei konstantem Volumen durch Hinzufügen des entsprechenden C₁- bis C₃-Alkohols erfolgt.

4. Verfahren nach Anspruch 1, dadurch gekennzeichnet, daß die Reduzierung des Wassergehaltes auf weniger als 1 Gew.-% durch Pervaporation erfolgt.

5. Verfahren nach Anspruch 1, dadurch gekennzeichnet, daß die Reduzierung des Wassergehaltes auf weniger als 1 Gew.-% durch Ultrafiltration erfolgt.

6. Verfahren nach einem oder mehreren der Ansprüche 1 bis 5, dadurch gekennzeichnet, daß die Kieselsoldispersion abschließend zusätzlich mit einem stark basischen Anionenaustauscherharz solange behandelt wird, bis der pH-Wert nicht mehr weiter ansteigt.

7. Verwendung der nach dem Verfahren gemäß den Ansprüchen 1 bis 6 hergestellten Kieselsoldispersionen zur Beschichtung von metallischen oder nichtmetallischen Substraten.

## Claims

1. Process for preparing a low-salt silica sol dispersion in C₁- to C₃-alcohols, comprising less than 1% by weight of water and up to 56% by weight of SiO₂ in the form of discrete particles of average diameter from 9 to 50 nm which have no linking via interparticular siloxane bonds, characterized in that, in the one-pot process to give an alkaline aqueous silica sol which comprises up to 50% by weight of SiO₂ in the form of discrete particles of average diameter from 9 to 50 nm which have no linking via interparticular siloxane bonds a strongly acid cation-exchanger resin is added in an amount sufficient to lower the pH to below 4, and then C₁- to C₃-alcohol is added in amounts of from 0.6 to 2 times the weight of the aqueous silica sol, and then the water content is reduced to less than 1% by weight, the cation-exchanger resin is removed and, as appropriate, the silica sol dispersion is concentrated to up to 56% by weight of SiO₂,

2. Process according to Claim 1, characterized in that the alcohol used comprises isopropanol.

3. Process according to Claim 1, characterized in that the reduction in the water content to less than 1% by weight takes place via azeotropic distillation at atmospheric or reduced pressure at constant volume via addition of the appropriate C₁- to C₃-alcohol.

4. Process according to Claim 1, characterized in that the reduction in the water content to less than 1% by weight takes place by pervaporation.

5. Process according to Claim 1, characterized in that the reduction in the water content to less than 1% by weight takes place by ultrafiltration.

6. Process according to one or more of Claims 1 to 5, characterized in that the silica sol dispersion is then additionally treated with a strongly basic anion-exchanger resin until there is no further rise in the pH.

7. Use of the silica sol dispersions prepared by the process according to Claims 1 to 6 for coating metallic or non-metallic substrates.

## Revendications

1. Procédé de préparation d'une dispersion de sol de silice à faible teneur en sels dans des alcools en C₁ à C₃, contenant moins de 1 % en masse d'eau et jusqu'à 56 % en masse de SiO₂ sous forme de particules discrètes d'un diamètre moyen de 9 à 50 nm, qui ne sont pas liées par des liaisons siloxanes interparticulaires, caractérisé en ce que, dans un procédé à récipient unique, à un sol de silice aqueux alcalin qui contient jusqu'à 50 % en masse de SiO₂ sous forme de particules discrètes d'un diamètre moyen de 9 à 50 nm, qui ne sont pas liées par des liaisons siloxanes interparticulaires, est ajoutée une résine échangeuse de cations fortement acide en une quantité qui est suffisante pour abaisser le pH en dessous de 4, après quoi une masse d'alcool en C₁ à C₃, qui est égale à 0,6 à 2 fois la masse du sol de silice aqueux est ajoutée, puis la teneur en eau est réduite à moins de 1 % en masse, la résine échangeuse de cations est séparée et éventuellement la dispersion de sol de silice est concentrée jusqu'à 56 % en masse de SiO₂.

2. Procédé selon la revendication 1, caractérisé en ce que l'on utilise l'isopropanol comme alcool.

3. Procédé selon la revendication 1, caractérisé en ce que la réduction de la teneur en eau à moins de 1 % en masse a lieu par distillation azéotropique à la pression atmosphérique ou sous pression réduite à volume constant, par addition de l'alcool en C₁ à C₃ correspondant.

4. Procédé selon la revendication 1, caractérisé en ce que la réduction de la teneur en eau à moins de 1 % en masse a lieu par pervaporation.

5. Procédé selon la revendication 1, caractérisé en ce que la réduction de la teneur en eau à moins de 1 % en masse a lieu par ultrafiltration.

6. Procédé selon une ou plusieurs des revendications 1 à 5, caractérisé en ce que la dispersion de sol de silice est finalement traitée en outre avec une résine échangeuse d'anions fortement basique jusqu'à ce que le pH n'augmente plus.

7. Utilisation des dispersions de sol de silice préparées par le procédé selon les revendications 1 à 6 pour revêtir des substrats métalliques ou non métalliques.
